# EUROPEAN PATENT SPECIFICATION

(11) **EP 0 823 352 B1**
(45) Date of publication and mention of the grant of the patent: **14.03.2001**
(21) Application number: 97305896.9
(22) Date of filing: 04.08.1997
(51) Int. Cl.: B60R 16/02

(54) **Rotary connector attachment structure and rotary connector**
Befestigung eines elektrischen Drehschalters und elektrischer Drehschalter
Fixation pour connecteur rotatif et connecteur rotatif

(30) Priority: 05.08.1996 JP 20604096; 02.09.1996 JP 23217496; 16.12.1996 JP 33565896
(43) Date of publication of application: 11.02.1998
(60) Divisional application: 98202815.1
(73) Proprietor: ALPS ELECTRIC CO., LTD., Ota-ku Tokyo 145 (JP)
(72) Inventor: Terashita, Satoshi, Toda-gun, Miyagi-ken (JP); Hayakawa, Hiroshi, Furukawa-shi, Miyagi-ken (JP)
(74) Representative: Kensett, John Hinton

(56) References cited:
- EP-A- 0 482 234
- EP-A- 0 771 693
- WO-A-95/09744
- DE-A- 19 511 693
- FR-A- 2 568 421
- US-A- 4 273 971
- US-A- 4 404 438

## Description

The present invention relates to an attachment structure for a rotary connector used as connecting means for electrically coupling electrical parts mounted on a steering wheel, e.g., an air bag inflator, to the body side, and a combination switch including various switch units, e.g., a headlight switch and a wiper switch, built therein. The present invention also relates to a steering unit provided with such an attachment structure.

Further, the present invention relates to a rotary connector used as connecting means for electrically coupling electrical parts mounted on a steering wheel, e.g., an air bag inflator and a horn switch, to the body side.

A rotary connector basically comprises a pair of housings coupled to each other in a relatively rotatable manner, and a flexible cable wound within an annular storage space defined between the pair of housings. The flexible cable has both conductor ends fixed to the respective housings and led out of the rotary connector, and connector terminals are attached to the led-out ends of the flexible cable. One of the housings serves as a movable housing and the other housing services as a stationary housing. When the movable housing is rotated in one direction, i.e., clockwise or counterclockwise, the flexible cable is rolled up or unrolled in the storage space depending on the direction of rotation of the movable housing. The rotary connector having the above-explained construction is incorporated in a steering apparatus of an automotive vehicle and used as connecting means for electrically coupling the column side and the steering wheel side. On this occasion, the stationary housing of the rotary connector is required to be attached to a stator member on the column side.

As a conventional attachment structure for such a rotary connector, there has been employed the so-called steering unit constructed such that a combination switch including various switch units (called stalk switches), e.g., a headlight switch and a wiper switch, built therein is fixed onto the column side beforehand, and the stationary housing of the rotary connector is attached by screws or the like to a flat upper surface of a casing which serves an outer shell of the combination switch. In addition, the movable housing of the rotary connector is locked to the rear side of the steering wheel by using a joint pin or the like. The connector terminals provided at both the ends of the flexible cable are jointed to respective external connectors provided on the combination switch and the steering wheel. With this structure, the movable housing is rotated in either direction, i.e., clockwise or counterclockwise, with turning operation of the steering wheel, while electrical parts mounted on the steering wheel, e.g., an air bag inflator and a horn switch, are always kept electrically connected to the column side through the flexible cable in the rotary connector.

Further, in some cases, both the ends of the flexible cable in the rotary connector are led out from both the housings through wire harnesses, and specific connectors attached to respective ends of the wire harnesses are jointed to corresponding connectors provided on the steering wheel and the combination switch. Additionally, in some cases, wire harnesses having specific connectors attached to their ends are also led out from the stalk switches, and the specific connectors are jointed to corresponding connectors in the combination switch. Then, external connectors provided on the combination switch are jointed to corresponding connectors on the body side.

Meanwhile, the height dimension of a rotary connector greatly depends on the width dimension of a flexible cable used in the rotary connector. For example, when audio switches, etc. are also mounted on a steering wheel in addition to the above-mentioned electrical parts such as the air bag inflator and the horn switch, the number of conductors of the flexible cable must be increased for connection of the increased number of electrical parts. This requires an increase in height dimension of a rotary connector. Also, there has been recently developed an automotive vehicle wherein the angle and direction through and in which a steering wheel is turned are detected by a steering sensor to carry out damping force control of a suspension, shift position control of an automatic transmission, etc. based on a signal detected by the steering sensor. In the trial design of such a recent automotive vehicle, the steering sensor is assembled on a combination switch along with a rotary connector.

However, a space between the combination switch and the steering wheel is restricted. Accordingly, if the above conventional structure of attaching the stationary housing of the rotary connector to the upper surface of the casing of the combination switch is employed, the rotary connector having a large height dimension could not be assembled in the space between the combination switch and the steering wheel. In particular, when the rotary connector and the steering sensor are both to be assembled in that space, the rotary connector is required to have a considerably lessened thickness. In other words, there is a problem that a rotary connector having a large number of conductors to be adaptable for an increased number of circuits cannot be assembled in the space.

Also, the above conventional attachment structure requires many wire harnesses for electrically connecting the rotary connector and the stalk switches to the body side, which results in problems of increasing the total weight of the steering unit and pushing up the production cost. Another problem is that when the stalk switches are repaired or replaced, repairing work is troublesome because the combination switch has to be disassembled after removing both the steering wheel and the rotary connector.

According to the present invention, there is provided a steering unit comprising a rotary connector for electrically connecting an electrical part mounted on a steering wheel to the vehicle body side; a combination switch including stalk switches; a printed board disposed within a casing serving as an outer shell of said combination switch; and connectors mounted on said printed board, capable of being jointed by direct coupling to connectors associated with said rotary connector and to connectors associated with said stalk switches; characterized by; a movable mechanism, which is provided either in each of the connectors provided on the printed board, or in each of the connectors associated with the rotary connector and the stalk switches, for absorbing offsets in relative positional relationship between said rotary connector and corresponding one of said connectors mounted on the printed board and between a stalk switch and corresponding one of said connectors mounted on the printed board, said movable mechanism being such that said connectors comprise a moving member for holding a plurality of terminals at one end of said terminals, said terminals being fixed to said printed board at the other end of said terminals and a bent portion being provided between said ends of said terminals.

The rotary connector may comprise a movable housing and a stationary housing coupled to each other in a relatively rotatable manner. The stationary housing can be attached to the casing of the combination switch in any suitable position. But, by fixing attachment lugs provided on the stationary housing to the top plate of the casing around the opening, the top plate of the casing is mechanically reinforced in the vicinity of the opening by the provision of the rotary connector, and therefore the casing of the combination switch can be prevented from lowering its strength.

The switch units are preferably the so-called stalk switches such as a headlight switch and a wiper switch. By detachably attaching the switch units to the sides of the rotary connector, the stalk switches can be easily repaired or replaced with no need of removing the steering wheel and the rotary connector.

By providing movable mechanisms for absorbing offsets in relative positional relationship between the rotary connector and one of the above connectors and between the stalk switches and others of the above connectors, even if there are slight variations in connector mount position when the rotary connector and the stalk switches are jointed by direct coupling to the corresponding connectors, the variations are absorbed by the movable mechanisms.

This ensures positive electrical connection between the connectors.

Further, by forming an opening in a top plate of the casing and attached the rotary connector to the casing in a state of being inserted in the opening, an effective space between the combination switch and the steering wheel is essentially so enlarged that a rotary connector having a relatively large height dimension can be assembled alone or even along with another part, such as a steering sensor, in the steering apparatus.

In the above rotary connector, by fixing a printed board to the stationary housing and mounting connectors, which are capable of being connected to the stalk switches upon fitting thereof to the receivers, on the printed board, the stalk switches can be electrically connected to the rotary connector at the same time as when the stalk switches are mechanically coupled to the receivers.

Further, by providing a connector of one-piece united type on a bottom surface of the stationary housing for electrical connection of an outer end of the flexible cable and the stalk switches to an exterior connector on the body side through the connector of one-piece united type, the rotary connector can be electrically connected to the external connector through one point, and hence work of assembling the rotary connector can be simplified.

Embodiments of the present invention will now be described, by way of example only, with reference to the accompanying drawings, in which:

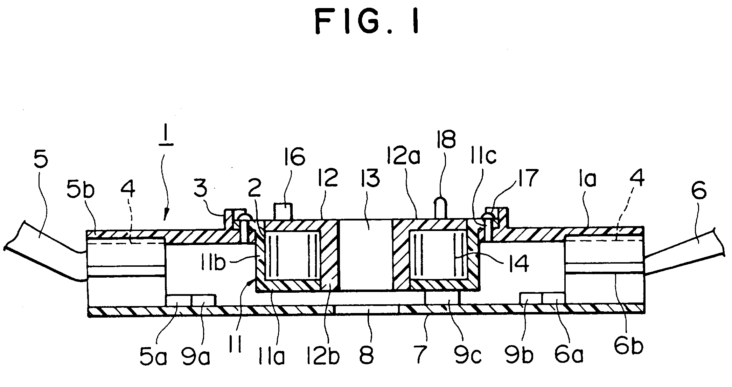

Fig. 1 is a sectional view showing a steering unit in a state where a rotary connector according to a first embodiment is attached to a combination switch.

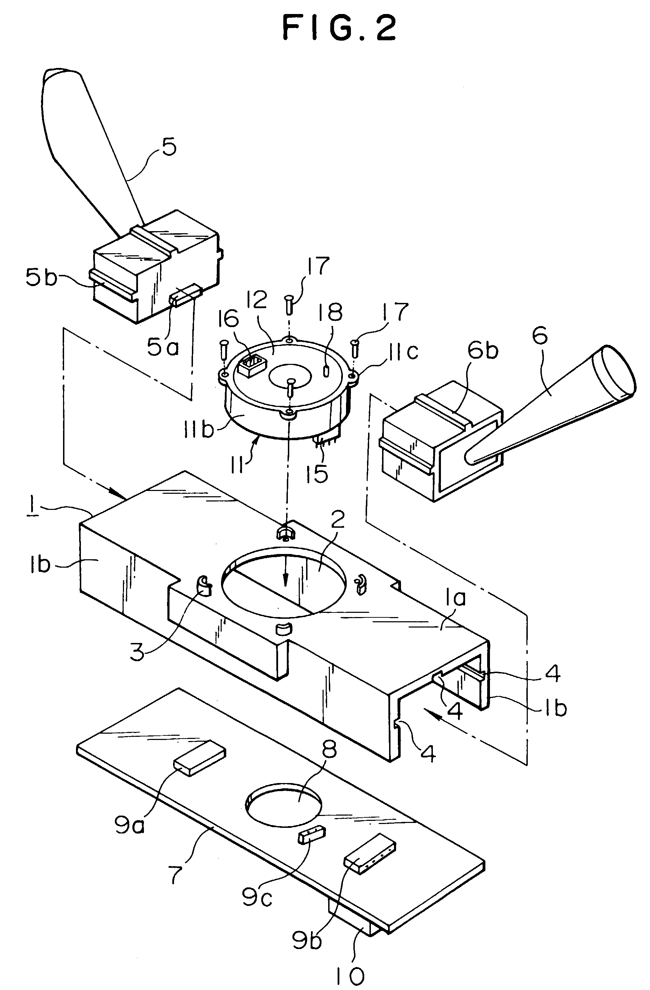

Fig. 2 is an exploded perspective view of components shown in Fig. 1.
Fig. 3 is a perspective view of a connector provided in the steering unit of Fig. 1; and
Fig. 4 is a perspective view of a terminal provided in the connector of Fig. 3.

According to an embodiment of the invention, as shown in those figures, a casing 1 serving as an outer shell of a combination switch comprises a top plate la and a pair of side walls 1b which are built up into the form of an inverted-channel being open downward. The casing 1 can be fixed to a column cover or the like (not shown). A circular opening 2 is formed in the top plate 1a and a plurality of insertion guides 3 are vertically provided on the top plate la around the opening 2. A guide groove 4 extending horizontally is formed in an inner surface of each of the top plate la and the side walls 1b such that a set of three guide grooves 4 is provided in each of left and right end portions of the casing 1. A pair of stalk switches 5, 6 fitted to the left and right end portions of the casing 1 have connectors 5a, 6a and base portions formed with guide ridges 5b, 6b corresponding to the guide grooves 4, respectively. After the guide ridges 5b, 6b are inserted into the casing 1 while engaging in and sliding along the guide grooves 4, the stalk switches 5, 6 are fixed in place by any suitable means, e.g., screw fastening or snap fitting.

A printed board 7 is fixed to the lower open end of the casing 1 by any suitable means, e.g., screw fastening. The printed board 7 has a through hole 8 formed therein for insertion of a steering shaft (not shown). Also, a plurality of connectors 9a, 9b, 9c and circuit parts (not shown) are mounted on the front side of the printed board 7, whereas an external output connector 10 is mounted on the rear side of the printed board 7. The connectors 9a, 9b, 9c are all electrically connected to one external output connector 10 through wiring patterns (not shown) on the printed board. Each of the connectors 9a to 9c includes a movable mechanism described later. The connector 9a is jointed to the connector 5a of the stalk switch 5, the connector 9b is jointed to the connector 6a of the stalk switch 6, and the connector 9c is jointed by direct coupling to a connector of a rotary connector described later.

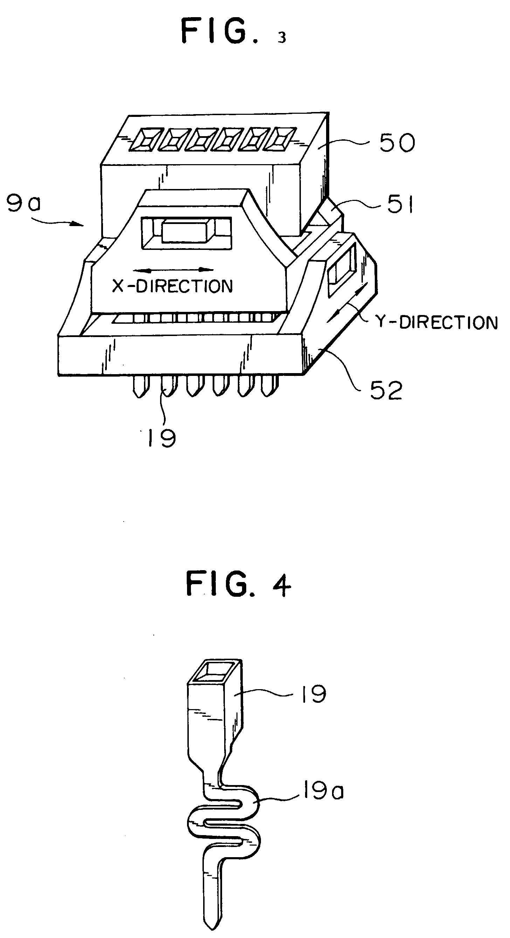

As shown in Fig. 3, the connector 9a comprises a first moving member 50 for holding a plurality of terminals 19, a second moving member 51 for guiding the first moving member 50 in the X-direction, and a support base 52 for guiding the second moving member 51 in the Y-direction. The first and second moving members 50, 51 and the support base 52 jointly constitute the movable mechanism. As shown in Fig. 4, a bent portion 19a is formed midway each of the terminals 19 so that the terminal 19 has sufficient flexibility. The terminals 19 are projected downward from the underside of the support base 52 and soldered to lands (not shown) on the printed board 7. Though not shown, the other connectors 9b, 9c also include similar movable mechanisms.

On the other hand, an outer shell of the rotary connector is made up of a stationary housing 11 and a movable housing 12 which are coupled to each other in a relatively rotatable manner. The stationary housing 11 comprises a ring-shaped bottom plate 11a and an outer tubular portion 11b in the cylindrical form with a plurality of attachment lugs 11c provided at an upper end of the outer tubular portion 11b. The movable housing 12 comprises a ring-shaped top plate 12a and an inner tubular portion 12b in the cylindrical form. The inner tubular portion 12b has a center bore 13 formed therethrough for insertion of the steering shaft. An annular storage space is defined by the bottom plate 11a, the outer tubular portion 11b, the top plate 12a and the inner tubular portion 12b of both the housings 11, 12. A flat cable 14 as a flexible cable is wound within the storage space in the form of, e.g., a spiral. The flat cable 14 has a plurality of conductors extending parallel to one another. An outer end of the flat cable 14 is fixed to the outer tubular portion 11b and connected to a stationary side connector 15 of direct coupling type provided on the underside of the bottom plate 11a. As mentioned above, the stationary side connector 15 is jointed by direct coupling to the connector 9c on the printed board 7. Also, an inner end of the flat cable 14 is fixed to the inner tubular portion 12b and connected to a movable side connector 16 of direct coupling type provided on the top plate 12a.

The rotary connector having the above construction is assembled in a steering apparatus as follows. First, the attachment lugs 11c on the stationary housing 11 are fixed by screws 17 to the casing 1 of the combination switch which is fixed to the column cover or the like. At this time, the stationary housing 11 is inserted through the opening 2 of the top plate 1a, and the attachment lugs 11c are moved down along the corresponding insertion guides 3 until coming into abutment against the top plate la. This enables the stationary side connector 15 to be automatically jointed to the connector 9c on the printed board 7, resulting in easier assembly. In a state of the rotary connector being thus attached in place, the rotary connector does not appreciably project above the casing 1 of the combination switch, and an assembly of the rotary connector and the combination switch has a relatively small size in the axial direction of the steering shaft. After that, a steering wheel (not shown) is fixed to the steering shaft. At this time, an engagement hole formed in the rear side of the steering wheel is fitted to a joint pin 18 provided on the movable housing 12, and a connector (not shown) provided on the steering wheel is jointed to the movable side connector 16. As a result, electrical parts mounted on the steering wheel, such as an air bag inflator, are electrically connected to the printed board 7 of the combination switch through the flat cable 14 in the rotary connector, while the printed board 7 is electrically connected through the external output connector 10 to a controller (not shown) provided on the body side.

The stalk switches 5, 6 and the rotary connector are attached to the casing 1 beforehand. A resulting assembly of the stalk switches, the rotary connector and the combination switch constitutes the steering unit. In assembling the steering unit, when the stationary housing 11 of the rotary connector is inserted through the opening 2 of the top plate la, and the attachment lugs 11c are guided by the corresponding insertion guides 3 and come into abutment against the top plate la, whereupon the stationary side connector 15 is automatically jointed to the connector 9c on the printed board 7. In this state, the attachment lugs 11c of the stationary housing 11 are fixed to the casing 1 by the screws 17. At this time, even if the stationary side connector 15 and the connector 9c are somewhat offset in relative positional relationship, the offsets are absorbed by the movable mechanism provided in the connector 9c, specifically, through movements of the first and second moving members 50, 51 relative to the support base 52 in the X- and Y-directions. Therefore, the stationary side connector 15 and the connector 9c can be surely jointed to each other by direct coupling, while reducing undesired stresses imposed on the joint portion. Further, when the guide ridges 5b, 6b of the talk switches 5, 6 are inserted into the casing 1 while engaging in and sliding along the guide grooves 4, the connectors 5a, 6a of the stalk switches 5, 6 are automatically jointed to the connectors 9a, 9b on the printed board 7, respectively. In this state, the stalk switches 5, 6 are fixed to the casing 1 by any suitable means, e.g., screw fastening or snap fitting. Also in this assembly step, offsets in relative positional relationship between the connectors 5a and 9a and between the connectors 6a and 9b are absorbed by the movable mechanisms provided in the connectors 9a, 9b.

The above steering unit is assembled in a steering apparatus as follows. After fitting the through hole 8 of the printed board 7 and the center hole 13 of the rotary connector on a steering shaft (not shown), the casing 1 is fixed to a stator member such as a column cover by any suitable means, e.g., screw fastening. At this time, the external output connector 10 provided on the rear side of the printed board 7 is jointed by direct coupling to a connector (not shown) provided on the body side. Then, a steering wheel (not shown) is fixed to the steering shaft. At this time, an engagement hole formed in the rear side of the steering wheel is fitted to the joint pin 18 provided on the movable housing 12, and a connector (not shown) provided on the steering wheel is jointed to the movable side connector 16. As a result, electrical parts mounted on the steering wheel, such as an air bag inflator, are electrically connected to the printed board 7 through the rotary connector, while the rotary connector and the stalk switches 5, 6 are electrically connected to the controller on the body side through the external output connector 10 on the printed board 7.

In operation, when the steering wheel is turned clockwise or counterclockwise, resultant rotating force is transmitted to the movable housing 12 through the joint pin 18, whereupon the movable housing 12 is rotated in the same direction as the steering wheel. For example, when the steering wheel is turned counterclockwise from its neutral position, the movable housing 12 is also rotated counterclockwise correspondingly and the flat cable 14 is rolled up around an outer circumferential surface of the inner tubular portion 12b. On the contrary, when the steering wheel is turned clockwise from its neutral position, the movable housing 12 is also rotated clockwise correspondingly and the flat cable 14 is unrolled along an inner circumferential surface of the outer tubular portion 11b. In any state, electrical connection between both the housings 11, 12 is maintained through the flat cable 14.

With the first embodiment described above, since the rotary connector is attached to the combination switch in such a state that most of both the housings 11, 12 of the rotary connector is embedded in the opening 2 formed in the top plate of the casing 1, it is possible to prevent an increase in height dimension of the assembly of the rotary connector and the combination switch (i.e., in dimension of the assembly in the axial direction of the steering shaft). Therefore, even when the height dimension of the rotary connector is increased to be adaptable for a larger number of circuits, or even when another part such as a steering sensor is integrally provided on the rotary connector, the rotary connector of this embodiment can be assembled in a limited space between the combination switch and the steering wheel.

Further, since the plurality of attachment lugs 11c provided at the upper end of the outer tubular portion 11b of the stationary housing 11 are fixed by the screws 17 to the top plate la around the opening 2, the mechanical strength of the upper plate la that is inevitably lowered due to the provision of the opening 2 can be reinforced by the attachment of the rotary connector, and therefore the casing 1 of the combination switch can be prevented from lowering its strength.

Additionally, since the stalk switches 5, 6 are detachably attached to the respective sides of the rotary connector, the stalk switches 5, 6 can be repaired or replaced from either side of the combination switch when required, with no need of removing the steering wheel and the rotary connector.

Also, with the above embodiment, because of the direct coupling between the stationary side connector 15 of the rotary connector and the connector 9c on the printed board 7 and between the connectors 5a, 6a of the stalk switches 5, 6 and the connectors 9a, 9b on the printed board 7 in the casing 1 of the combination switch, wire harnesses for electrical connection between the connectors are no longer required and a reduction in both weight and cost of the steering unit can be achieved. Further, since the connectors 9a to 9c are collectively connected to one external output connector 10, the steering unit and the body side are electrically interconnected through one position, resulting in simpler assembly work.

Moreover, because of the connectors 9a to 9c each including the movable mechanism, even if there are slight offsets between parts when the stationary side connector 15 of the rotary connector and the connectors 5a, 6a of the stalk switches 5, 6 are jointed by direct coupling to the corresponding connectors 9a to 9c, the offsets can be absorbed by the movable mechanisms.

While the above embodiment has been described as using the casing 1 in the form of an inverted-channel being open downward, the shape of the casing 1 may be modified appropriately depending on the design of the combination switch, etc. For example, the printed board 7 may be mounted in the casing 1 comprising a box-shaped casing enclosed at the bottom and being open at left and right sides. Using such a structure is advantageous in increasing the rigidity of the casing 1 and attaching stalk switches which tend to impose larger loads on their base portions.

Also, the above embodiment has been described as providing the movable mechanisms in the connectors 9a to 9c on the printed board 7. On the contrary, however, the movable mechanisms may be provided in the stationary side connector 15 of the rotary connector and the connectors 5a, 6a of the stalk switches 5, 6. The structure of the movable mechanism is not limited to that illustrated above.

## Claims

1. A steering unit comprising:
a rotary connector for electrically connecting an electrical part mounted on a steering wheel to the vehicle body side;
a combination switch including stalk switches (5,6);
a printed board (7) disposed within a casing (1) serving as an outer shell of said combination switch; and
connectors (9a,9b,9c) mounted on said printed board, capable of being jointed by direct coupling to connectors (15) associated with said rotary connector and to connectors (5a, 6a) associated with said stalk switches; characterized by;
a movable mechanism (50,51,52), which is provided either in each of the connectors provided on the printed board, or in each of the connectors associated with the rotary connector and the stalk switches, for absorbing offsets in relative positional relationship between said rotary connector and corresponding one of said connectors mounted on the printed board and between a stalk switch and corresponding one of said connectors mounted on the printed board, said movable mechanism being such that said connectors comprise a moving member (50) for holding a plurality of terminals at one end of said terminals, said terminals being fixed to said printed board at the other end of said terminals and a bent portion (19a) being provided between said ends of said terminals.

2. The steering unit as claimed in Claim 1, characterized in that an opening (2) is formed in a top plate (la) of said casing and said rotary connector is attached to said casing when inserted in said opening.

3. The steering unit as claimed in Claim 1 or Claim 2, characterized in that an external connector (10) connected to said connectors for collective outputting through one position is also mounted on said printed board.

4. The steering unit as claimed in Claim 2, characterized in that said rotary connector comprises a movable housing (12) and a stationary housing (11) coupled to each other in relatively rotatable manner and attachment lugs (11c) provided on said stationary housing are fixed to the top plate of said casing around said opening.

5. The steering unit as claimed in any preceding claim, characterized in that said stalk switches are detachably attached to sides of said casing.

## Patentansprüche

1. Lenkeinheit aufweisend:
ein Drehverbindungsstück, welches ein an einem Lenkrad befestigtes elektrisches Bauteil mit der Fahrzeug-Karosserieseite elektrisch verbindet;
einen Kombinationsschalter, welcher Stielschalter (5, 6) beinhaltet;
eine Leiterplatte (7), die in einem Gehäuse (1) angeordnet ist, das als äußere Umhüllung des Kombinationsschalters dient; und
auf der Leiterplatte befestigte Verbindungsstücke (9a, 9b, 9c), die in der Lage sind, durch direktes Verbinden mit Verbindungsstücken (15) verbunden zu werden, die dem Drehverbindungsstück zugehörig sind, sowie mit Verbindungsstücken (5a, 6a), die den Stielschaltern zugehörig sind;
gekennzeichnet durch
einen beweglichen Mechanismus (50, 51, 52), welcher entweder in jedem der auf der Leiterplatte vorgesehenen Verbindungsstücke oder in jedem der dem Drehverbindungsstück und den Stielschaltern zugehörigen Verbindungsstücke vorgesehen ist, um einen Relativpositionsversatz zwischen dem Drehverbindungsstück und dem entsprechenden der auf der Leiterplatte angebrachten Verbindungsstücke sowie zwischen einem Stielschalter und einem entsprechenden der auf der Leiterplatte angebrachten Verbindungsstücke auszugleichen, wobei der bewegliche Mechanismus derart beschaffen ist, dass die Verbindungsstücke ein bewegliches Element (50) aufweisen, welches eine Mehrzahl von Anschlussstücken an einem Ende der Anschlussstücke haltert, wobei diese Anschlussstücke mit ihrem anderen Ende auf der Leiterplatte befestigt sind und ein gebogener Abschnitt (19a) zwischen den Enden der Anschlussstücke vorgesehen ist.

2. Lenkeinheit nach Anspruch 1, dadurch gekennzeichnet, dass eine Öffnung (2) in einer oberen Platte (la) des Gehäuses ausgebildet ist und das Drehverbindungsstück am Gehäuse befestigt ist, wenn es in die Öffnung eingesetzt ist.

3. Lenkeinheit nach Anspruch 1 oder 2, dadurch gekennzeichnet, dass auch ein mit den Verbindungsstücken verbundenes externes Verbindungsstück (10) für eine Sammelausgabe über eine einzige Stelle an der Leiterplatte befestigt ist.

4. Lenkeinheit nach Anspruch 2, dadurch gekennzeichnet, dass das Drehverbindungsstück ein bewegliches Gehäuse (12) und ein stationäres Gehäuse (11) aufweist, die miteinander in relativ zueinander drehbarer Weise verbunden sind und am stationären Gehäuse vorgesehene Befestigungsnasen (llc) an der oberen Platte des Gehäuses um die Öffnung herum befestigt sind.

5. Lenkeinheit nach einem der vorstehenden Ansprüche, dadurch gekennzeichnet, dass die Stielschalter abnehmbar an den Seiten des Gehäuses befestigt sind.

## Revendications

1. Un bloc de changement de direction comprenant:
un connecteur rotatif pour connecter électriquement une pièce électrique, montée sur un volant de direction, au côté du châssis du véhicule;
un commutateur à combinaison comprenant des commutateurs à tige (5,6);
un panneau imprimé (7) logé à l'intérieur d'un boîtier (1) servant d'enveloppe extérieure du commutateur à combinaison; et
des connecteurs (9a,9b,9c) montés sur le panneau imprimé, pouvant être assemblés par couplage direct aux connecteurs (15), situés sur le connecteur rotatif et aux connecteurs (5a,6a) situés sur les commutateurs à tige;
**caractérisé par:**
un mécanisme mobile (50,51,52) prévu soit dans chacun des connecteurs situés sur le panneau, ou dans chacun des connecteurs situés sur le connecteur rotatif et les commutateurs à tige, pour compenser les décentrages dans les rapport relatifs de position entre le connecteur rotatif et l'un des connecteurs correspondants montés sur le panneau imprimé et entre l'un des commutateurs à tige et le connecteur correspondant monté sur le panneau imprimé; ce mécanisme mobile étant conçu de façon à ce que les connecteurs comprennent un membre mobile (50) pouvant tenir plusieurs bornes à un de leurs bouts, ces bornes étant fixées au panneau imprimé par leur autre bout et une partie courbe (19a) étant prévue entre les extrémités desdites bornes.

2. Un bloc de changement de direction selon la revendication 1, **caractérisé par le fait** qu'une ouverture (2) est aménagée dans la plaque (la) supérieure du boîtier et que le connecteur rotatif s'attache au boîtier quand il est inséré dans l'ouverture.

3. Bloc de changement de direction selon la revendication 1 ou 2, **caractérisé en ce qu'**un connecteur extérieur (10) connecté aux dits connecteurs pour sortie collective par une position est également monté sur le panneau imprimé.

4. Bloc de changement de direction selon la revendication 2, **caractérisé en ce que** le connecteur rotatif comprend un carter amovible (12) et un carter fixe (11) accouplés l'un à l'autre d'une manière relativement rotative et que des pattes d'attache (11c) prévues sur le carter fixe sont fixées sur la plaque supérieure du boîtier autour de l'ouverture susmentionnée.

5. Bloc de changement de direction selon l'une quelconque des revendications précédentes, **caractérisé en ce que** les commutateurs à tige sont fixés d'une façon détachable aux côtés du boîtier.
